# EUROPEAN PATENT SPECIFICATION

(11) **EP 4 515 518 B1**
(45) Date of publication and mention of the grant of the patent: **25.03.2026**
(21) Application number: 22812474.9
(22) Date of filing: 25.10.2022
(51) Int. Cl.: G09B 23/28

(54) **TRAINING MANIKIN WITH COMPRESSIVE CHEST**
TRAININGSKIN MIT KOMPRESSIVER BRUST
MANNEQUIN D'ENTRAÎNEMENT À POITRINE DE COMPRESSION

(30) Priority: 27.04.2022 NO 20220475
(43) Date of publication of application: 05.03.2025
(73) Proprietor: Laerdal Medical AS, 4002 Stavanger (NO)
(72) Inventor: VASTVEDT, Jan Håvard, 4318 Sandnes (NO); ANGLEVIK, Helge, 4077 Hundvåg (NO); FELIU, Marc Saboya, 4331 Ålgård (NO); ZUCHOWSKI, Peter, 4100 Jørpeland (NO)
(74) Representative: Bryn Aarflot AS
(86) International application number: PCT/EP2022/079791
(87) International publication number: WO 2023/208399

(56) References cited:
- WO-A1-2012/041759
- WO-A1-2022/032033
- US-A- 3 916 535
- US-B1- 6 500 009

## Description

### Technical Field

The present invention relates to a training manikin with a compressive chest, for training of resuscitation.

### Background Art

Training manikins of the above-mentioned type have been known for a long while. They typically have a compressive chest, and over time more and increasingly advanced functions have been added. Such functions include measurements of compressive force, depth, and rate. Manikins of this type commonly also include a lung function for training of pulmonary resuscitation.

One known solution of obtaining a compressible chest portion of the manikin, is to make the chest portion of a flexible plate material. Moreover, it is common to arrange a spiral spring between the plate material and a base portion.

Such a solution is disclosed in US9852659. Here, a fan-shaped distribution of leaf springs is combined with a spiral spring. The spiral spring must be removed to enable stacking of the torsos.

Publication US4850876 presents a solution where resiliently, compressible members are interposed between two panels that are forced towards each other during chest compression.

Furthermore, WO2012041759 discloses a compressive chest portion, where a flexible beam of plate bridges two support structures protruding from a base portion. One of the support structures has a curved support face, such that the compressive force increases with compression depth. In addition, a compressible element is interposed between the flexible beam and the chest plate.

US6227864 presents a manikin having a flexible chest plate embedded in a torso made of a deformable foam.

Patent publication US6500009 B1 discloses a training manikin where the torso of several manikins can be stacked on top of each other when the head part is removed.

Several of the known manikins are not possible to stack into each other. Hence, they occupy much space during storage and are cumbersome to transport. Furthermore, some manikins are stackable but require significant time for assembly before they can be used.

An object of the present invention may be to provide a stackable training manikin having a compressible chest and lung function. Additional objects will be clear to she skilled reader from the description below.

### Summary of invention

The invention is defined by the appended claims. According a first aspect of the present invention, there is provided a manikin for practicing resuscitation, comprising a main body comprising a chest aperture, a compression plate that extends across the chest aperture, a hinged support that supports the compression plate at one side of the chest aperture and a sliding support that supports the compression plate at an opposite side of the chest aperture. A chest plate is arranged above and attached to the compression plate, wherein the chest plate comprises a curved lower plate face that faces the compression plate.

The chest plate is preferably made of a substantially non-flexible material, meaning that the shape of the chest plate is not intended to change during chest compressions.

With the term sliding support is meant a support that supports the compression plate, and wherein the contact area between the sliding support and the compression plate moves along the latter during chest compression. The sliding support can thus comprise a rotating roller that rolls against the compression plate. The sliding support can also comprise a fixed surface against which the compression plate slides during compressions.

It will be appreciated that while herein reference is often made to the main body as one single item, the main body can also be manufactured from several items that are assembled into one common structure.

In some embodiments, the main body can comprise a lower rim that defines a lower aperture, an upper main body surface, and side walls that extend upwards from the lower rim towards the upper main body surface of the main body. The upper main body surface can comprise the chest aperture.

In some embodiments, the chest plate can comprise an upper plate that has a convex, upward curvature, and a chest plate chamber comprising electric circuitry. The chest plate can thus comprise an upper plate and a lower plate, wherein the chest plate chamber is located between the upper plate and the lower plate. The electric circuitry can for instance be installed on a printed circuit board (PCB).

In some embodiments, the compression plate may be attached to an end body at the hinged support, wherein the end body comprises a curved support face. The curved support face can be supported by an opposite curved support face. Moreover, the hinged support can comprise a sensor for measuring the angle of the compression plate at the position of the hinged support.

The sensor can in some embodiments be an inductive sensor and the hinged support can further comprise a metal element. The metal element can contribute to enable the inductive sensor to measure angular changes.

Advantageously, the sensor can be attached to the end body or to the compression plate, while the metal element is attached to or at least fixed with respect to the main body. In such embodiments, a signal channel can advantageously be provided, extending from the end body, along the compression plate, to the chest plate.

The chest plate can in some embodiments have a width that is larger than the width of the compression plate, and which fits within the chest aperture.

Advantageously, when in a non-compressed state, the end of the compression plate that is located at the sliding support is arranged in a receiving recess of the main body.

In some embodiments, the chest plate can comprise a chest plate cutout configured to receive a portion of the compression plate during compressions. A chest plate protrusion can then extend in the same direction as the compression plate, on respective sides of the compression plate. The chest plate protrusions may then be moved downwardly beyond the compression plate during chest compressions.

The main body can have a neck portion and a flexible air transmission joint can be attached to the neck portion. The flexible air transmission joint can comprise a first joint part with an inner flow channel and an outer sliding surface and a second joint part with a joint aperture and an inner sliding surface. The outer sliding surface and the inner sliding surface have coaxial or concentric curved shapes. This enables mutual pivoting movement about a pivot axis.

The said outer and inner sliding surfaces can have the shape of a portion of a sphere or of a portion of a cylinder with circular cross section.

The manikin may comprise a rear head part and a detachable front head part. When the front head part is in a detached state, the lower aperture can be configured to receive the upper main body surface and a part of the side walls of another main body. The rear head part can be configured to be received partially inside a rear head part attached to said other main body.

In this manner, the manikin can be stacked in a compact manner for transport and storage. Moreover, the hinged connection between the manikin's head and torso (or main body) does not need disassembly for enabling the said stacking.

In some embodiments, the main body can further comprise a neck portion, and the manikin can further comprise a hinge connection connecting the neck portion and the rear head part in a pivoting manner about a pivot axis. The rear head part may comprise a rear recess configured to receive a hinge connection of another neck portion and rear head part. This contributes to making the manikin stackable with other manikins.

In some embodiments, the main body can comprise a receiving recess at the location of the sliding support, wherein one end of the compression plate is received in the receiving recess.

When bending the compression plate during chest compressions, the end of the compression plate arranged at the sliding support may tend to protrude upwards in an inclined direction. By arranging this end of the compression plate within the receiving recess, one may avoid that the end of the compression plate protrudes excessively upwards. If protruding excessively upwards, it could be visible as it could lift up a part of a flexible torso sheet covering parts of the main body.

According to a second aspect of the present invention, there is provided a stack of manikins for practicing resuscitation, wherein each manikin comprises a main body, a compression plate extending across a chest aperture of the main body, and a rear head part attached to the main body with a hinge connection. An upper main body surface and side walls of the main body of lower manikins are received through lower apertures defined by a lower rim of the main body of upper manikins. Moreover, the rear head part of upper manikins are received in the rear head part of lower manikins.

There is also disclosed a manikin for practicing resuscitation, comprising a main body with a neck portion, a lung bag with a lung channel, a rear head part and a front head part that are configured to pivot with respect to the main body about a pivot axis. According to the third aspect of the invention, the manikin further comprises a flexible air transmission joint that comprises a first joint part comprising an outer sliding surface and an inner flow channel, a second joint part comprising an inner sliding surface sliding against said outer sliding surface and comprising a joint aperture. The first or the second joint part is fixed with respect to the neck portion, and the second or first joint part, respectively, is connected to the front head part or to the rear head part.

In some embodiments, the front head part and the rear head part can be made as one part. In other embodiments, the front and rear head parts can be detachable. For instance, the front head part can be detached while the rear head part remains connected to the main body, via a hinge connection.

### Detailed description of the invention

While various features of the invention have been presented above in general terms, a more detailed and non-limiting example of embodiment will be presented in the following with reference to the drawings, in which
- Fig. 1: is an exploded perspective view showing the main parts of a manikin according to the present invention;
- Fig. 2: is a perspective view of a manikin main body and a compression plate bridging a chest aperture in the main body;
- Fig. 3: is a perspective view corresponding to Fig. 2, however with a chest plate connected to the compression plate;
- Fig. 4: is a cross section view of the compression plate and the chest plate when in a non-compressed state;
- Fig. 5: is a cross section view substantially corresponding to Fig. 4, however in a compressed state;
- Fig. 6: is a cross section side view of the manikin;
- Fig. 7: is an enlarged cross section view of a hinged support when the compression plate is in a non-compressed state;
- Fig. 8: is an enlarged cross section view corresponding to Fig. 7, however when in a compressed state;
- Fig. 9: is a perspective view showing the compression plate and the chest plate;
- Fig. 10: is an enlarged cross section view illustrating a flexible air transmission joint;
- Fig. 11: is a perspective view of a neck portion of the main body, and a connected rear head part; and
- Fig. 12: is a perspective view illustrating a stack of manikins according to the invention.

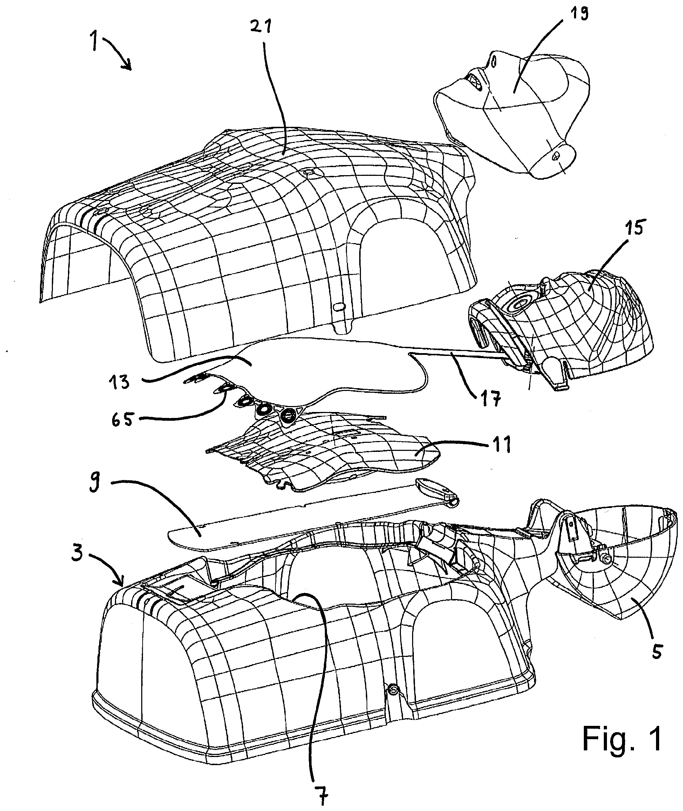

Fig. 1 is a perspective, exploded view of an embodiment of a manikin 1 according to the invention. As the skilled reader will appreciate, when in use, the shown parts of the manikin 1 will be in an assembled state. The manikin 1 has a main body 3 that forms the torso of the manikin 1. To the main body 3 there is attached a rear head part 5. The rear head part 5 is able to pivot with respect to the main body 1.

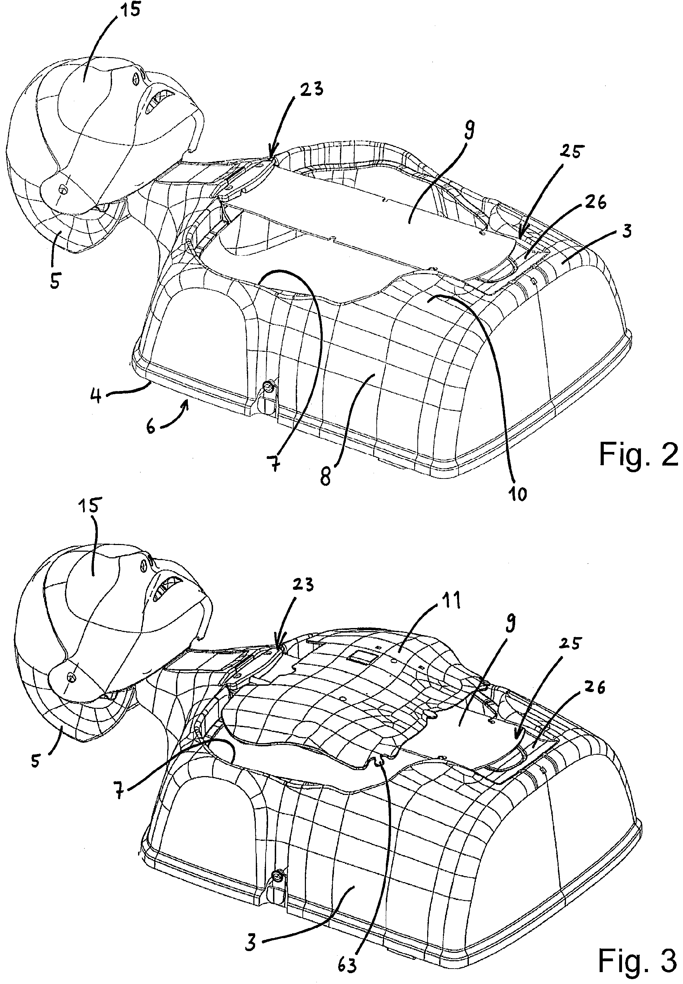

The main body 1 comprises a chest aperture 7. Bridging the chest aperture 7 is a compression plate 9. The mutual relationship between the main body 3 and the bridging compression plate 9 is also shown in Fig. 2.

To the compression plate 9 there is attached a chest plate 11. The chest plate 11 is interposed between the compression plate 9 and a lung bag 13. The lung bag 13 connects to a front head part 15 via a lung channel 17. When in the assembled state, the front head part 15 is connected to the rear head part 5.

To the front head part 15 there is attached, when in the assembled state, a face part 19. The face part 19 can typically be of a soft material imitating human skin. Moreover, a flexible torso sheet 21 covers at least a portion of the main body 3, and the compression plate 9, chest plate 11, and lung bag 13. The flexible torso sheet 21 is also made of a flexible and skin-imitating material.

While some of the main parts of the manikin 1 have now been briefly introduced, a more detailed discussion of these and further components will be given in the following.

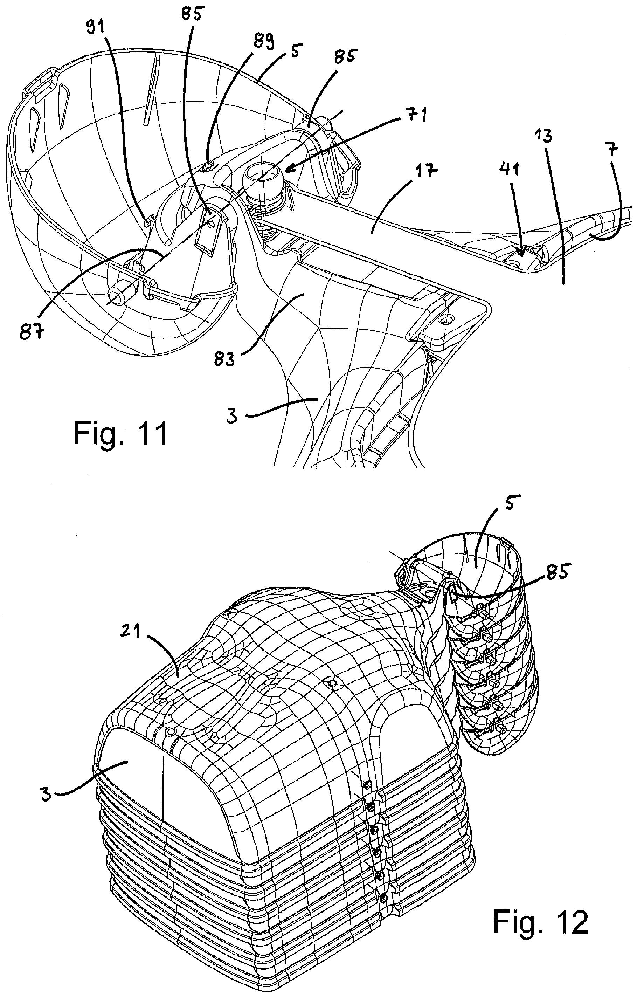

Reference is made to Fig. 2. The main body 3 comprises a lower rim 4. The lower rim 4 lands on the foundation (not shown) and defines a lower aperture 6. The lower aperture 6 is not directly visible in Fig. 2. The lower aperture 6 enables stacking of several main bodies 3 on each other in a compact fashion, as shown in Fig. 12. It will be understood that the lower rim 4 not necessarily will have the shape of a continuous edge about the lower aperture 6.

The main body 3 further has side walls 8 that extend upwards from the lower rim 4. The side walls 8 extend upwards towards an upper main body surface 10. The upper main body surface 10 may resemble the front of a human torso. The said chest aperture 7 is arranged in the upper main body surface 10. Hence, there is space inside the main body 3, i.e. below the upper main body surface 10 and within the side walls 8, to accommodate a substantial portion of another main body 3, such as shown in Fig. 12.

The compression plate 9 extends from a hinged support 23 at one side of the chest aperture 7, to a sliding support 25 at the opposite side of the chest aperture 7. When a user is practicing chest compressions, the compression plate 9 will curve downwards towards the foundation (not shown), such as the floor, table or other surface. Notably, in the shown embodiment, the manikin 1 has no further components between the said foundation and the middle portion of the compression plate 9. This contributes to enabling a compact stacking when more manikins 1 are stacked together.

In the embodiment shown herein, the sliding support 25 comprises a fixed, supporting portion, against which the compression plate 9 will slide during chest compressions. In other embodiments, however, the sliding support 25 may comprise a roller that supports the compression plate 9. The roller would then rotate back and forth along the compression plate 9 during chest compressions.

Fig. 3 depicts the same as Fig. 2, as well as the chest plate 11. In this embodiment, the chest plate 11 is attached to the compression plate 9. Thus, when practicing chest compressions, the compression force is transmitted onto the compression plate 9 through the chest plate 11. Advantageously, the perimeter of the chest plate 11 will fit inside the chest aperture 7 of the main body 3, so that it can move downwards past the edge that defines the chest aperture 7. Preferably, the perimeter of the chest plate 11 will, at the location where the compression plate 9 is not present, substantially follow the perimeter of the chest aperture 7, however with sufficient distance to avoid contact during chest compression.

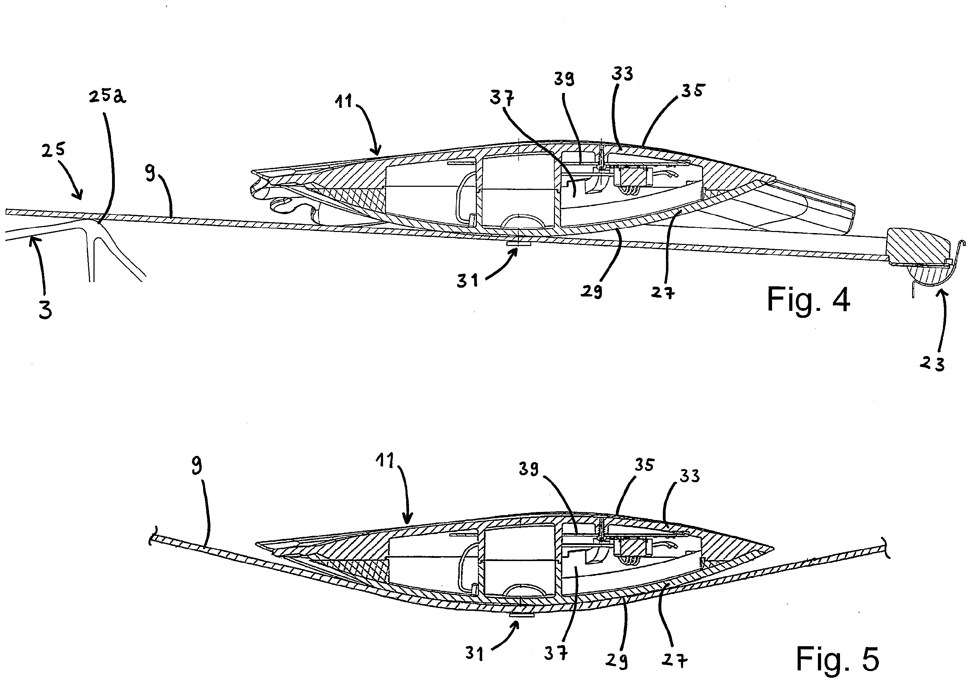

Fig. 4 is a cross section view through the chest plate 11 and the compression plate 9, shown in a non-compressed state. The hinged support 23 is indicated at the right-hand side and will be discussed further below. The sliding support 25 is shown at the left-hand side. The sliding support 25 comprises a sliding shoulder 25a, which supports the compression plate 9. During compression, the compression plate 9 will curve and thus slide against the sliding shoulder 25a. In the present embodiment, the sliding shoulder 25a is a part of the main body 3. As indicated in Fig. 3, the main body 3 comprises a receiving recess 26 that receives the end of the compression plate 9. The receiving recess 26 ensures that the end of the compression plate 9 does not protrude upwards, beyond the upper surface of the main body during compression. It is recalled that the compression plate 9 will be hidden by the flexible torso sheet 21 arranged over it though. In other embodiments the sliding shoulder 25a could be provided with an additional component.

The chest plate 11 comprises a curved lower plate 27. The curved lower plate 27 has a curved lower plate face 29, that abuts against the upper face of the compression plate 9. The lower plate 27 is attached to the compression plate 9, such as with a pair of screws, at an attached position 31. When in the shown non-compressed state, the lower plate face 29 curves upwards away from the compression plate 9 at both sides of the attached position 31.

In the shown embodiment, the chest plate 11 further comprises an upper plate 33. The upper plate 33 has a curved upper plate face 33. When in the assembled state, the flexible torso sheet 21 will abut against the upper plate face 33. As appears from the cross section view of Fig. 4, there is a chest plate chamber 37 provided between the lower plate 27 and the upper plate 33. Arranged inside the chest plate chamber 37 is a printed circuit board 39 (PCB). The PCB 39 comprises various functions, such as a wireless communication unit (e.g. *Bluetooth*), an accelerometer for measuring during chest compression, and possible other sensors.

The lower plate 27 can be attached to the upper plate 33 for instance with screws (not shown).

Fig. 5 depicts substantially the same items as shown in Fig. 4, however when in a compressed state. The compression plate 9 is now curved and a portion of the compression plate 9 follows, i.e. is in contact with, a length of the lower plate face 29 of the lower plate 27. Of course, a small downwardly directed compression force will result in a small compression distance, while a large force will result in a larger compression distance. Notably, the force needed per additional compression length increases with the compression length. In other words, the force-compression curve is non-linear.

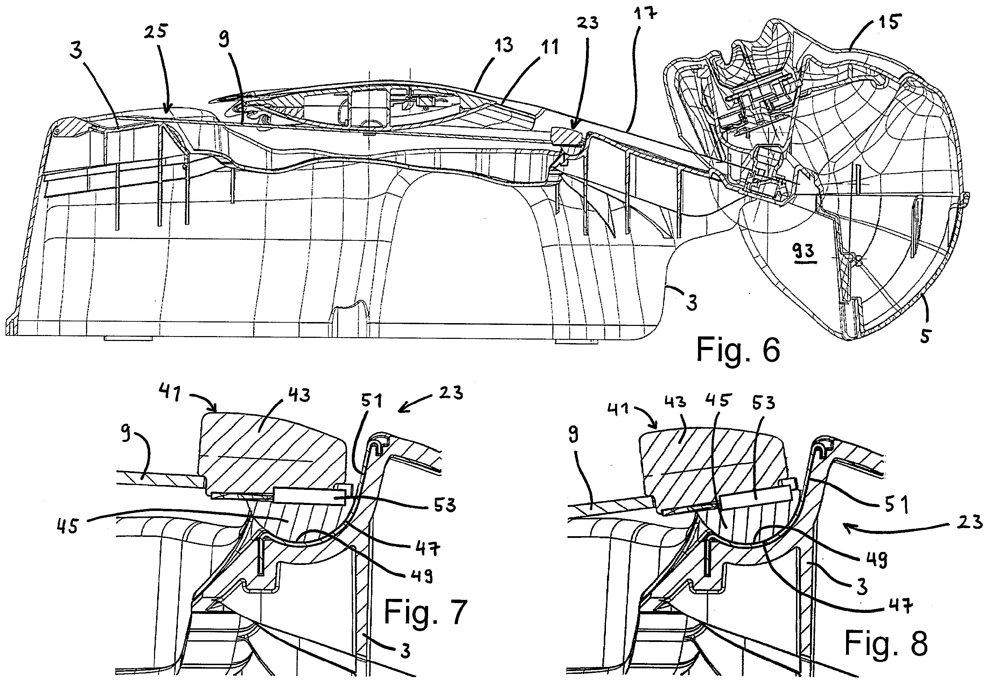

Fig. 6 depicts, with a cross section side view, the main body 3, rear and front head parts 5, 15, compression plate 9, chest plate 11, and the lung bag 13 with its lung channel 17. In Fig. 6 the compression plate 9 is shown in the non-compressed state.

Fig. 7 and Fig. 8 are enlarged cross section views of the hinged support 23 when in a non-compressed state and a compressed state, respectively. The compression plate 9 is at its end attached to an end body 41. The end body 41 comprises a first end body part 43 and a second end body part 45. These are attached to each other and to the compression plate 9, for instance by means of screws (not shown). The second end body part 45 comprises a curved hinge face 47.

The curved hinge face 47 has, in the shown embodiment, a convex configuration, and is supported on a concave, curved support face 49. The curved support face 49 is in the shown embodiment a part of the main body 3. However, as the skilled person will appreciate, the curved support face 49 could also be provided with an additional component.

Embedded in and substantially flush with the curved support face 49, there is preferably arranged a metal element 51. In this embodiment, the metal element 51 is formed as a plate having a curved portion.

As the skilled person now appreciates, during chest compression the end body 41 pivots back and forth while being supported by the curved support face 49, and/or by the metal element 51

Furthermore, to the end of the compression plate 9 there is attached a sensor 53. In the shown embodiment, the sensor 53 is attached to the end body 41, interposed between the first end body part 43 and the second end body part 45.

The sensor 53 is configured to measure the angle of the sensor 53, and thus the angle of the end of the compression plate 9, with respect to the main body 3. Advantageously, the sensor 53 can be an inductive sensor. By using metal material in the metal element 51, the inductive sensor 53 is able to sense angle displacements during chest compressions. Furthermore, by means of a calculation unit (not shown), for instance embedded in the PCB 39 (Fig. 4), the degree of chest compression (or compression distance) can be calculated based on the measured compression angle of the compression plate 9.

It will be appreciated that other solutions can be applied for measuring chest compression, such as an accelerometer provided in the chest plate 11. Moreover, it will be appreciated that instead of using a metal element 51 having the curved configuration to provide metal in the vicinity of the sensor 53, another element comprising metal can be provided.

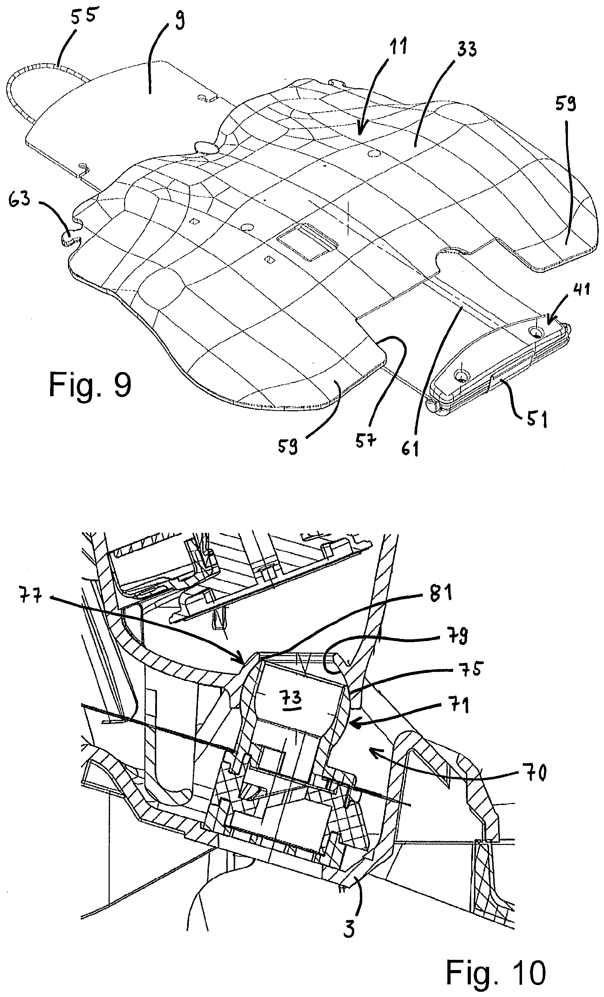

Fig. 9 is a perspective view showing the chest plate 11 and the compression plate 9, to which the chest plate 11 is attached. To the end of the compression plate 9 that is located at the sliding support (cf. Fig. 2), a string 55 is attached. The string 55 is also secured to the main body 3. This is to ensure that an excessive chest compression, i.e. an excessive downwardly bending of the compression plate 9, does not move the end of the compression plate 9 down beyond the sliding shoulder 25a (Fig. 4) and through the chest aperture 7 (Fig. 1).

Still referring to Fig. 9, the chest plate 11 comprises a chest plate cutout 57. The chest plate cutout 57 is for receiving the compression plate during deep chest compressions. On respective sides of the compression plate 9 and the chest plate cutout 57, the chest plate 11 comprises a chest plate protrusion 59. Thus, during deep compressions, at least a portion of the respective chest plate protrusions 59 may be moved vertically beyond the adjacent part of the compression plate 9.

Furthermore, to the compression plate 9 there is arranged a signal channel 61, comprising an electric signal wire (not shown) that connects the sensor 53 to the PCB 39 or other electric equipment in the chest plate 11. In alternative embodiments, the electric signal wire could be attached directly to the surface of the compression plate 9 (i.e. without the signal channel 61), such as with a glue or fastening hooks.

The chest plate 11 also comprises lung bag attachment means 63. In the shown embodiment, the lung bag attachment means 63 are in the form of protrusions. The lung bag attachment means 63 are configured to connect with lung bag connection loops 65, shown in Fig. 1.

Fig. 10 is an enlarged portion of the cross-section view shown in Fig. 6. Attached to the main body 3, or at least in a fixed position with respect to the main body 3 (thus indirectly connected to the main body 3), is a flexible air transmission joint 70. A first joint part 71 has an inner flow channel 73 and an outer sliding surface 75. The outer sliding surface 75 has a shape corresponding to a portion of a sphere. The flexible air transmission joint 70 further comprises a second joint part 77. The second joint part 77 has an inner sliding surface 79 that abuts against the outer sliding surface 75 of the first joint part 71. Moreover, the inner sliding surface 79 also has a configuration corresponding to a portion of a sphere, fitting snugly onto the outer sliding surface 75. The flexible air transmission joint 70 further has a joint aperture 81. The joint aperture 81 can be a part of the second joint part 77. In this way, air can be communicated through the flexible air transmission joint 70 at different mutual angular orientations of the first and second joint parts 71, 77.

Instead of having configurations corresponding to parts of a sphere, the outer sliding surface 75 and the inner sliding surface 79 could instead have configurations corresponding to a portion of a cylinder with a circular cross section. A pivot axis 87, about which the first and second joint parts 71, 77 can mutually rotate, is indicated in Fig. 11.

In the shown embodiment, the second joint part 77 is a part of or connected to the front head part 15 (cf. Fig. 1). The front head part 15 is configured to be attached to the rear head part 5, such that the second joint part 77 is maintained in position on the first joint part 71. As the skilled person will appreciate, the positions of the first and second joint parts 71, 77 can be switched, such that the outer sliding face 75 would be connected to the front head part 15 instead of to the main body 3.

Fig. 11 is a cross-section view showing the rear head part 5 connected to the main body 3. The main body 3 comprises a neck portion 83. The rear head part 5 connects to the neck portion 83 with a hinge connection 85 on respective sides of the first joint part 71. The rear head part 5 is thus able to pivot with respect to the main body 3, about the pivot axis 87 that in the shown image extends through the first joint part 71.

The neck portion 83 of the body part 3 comprises a first elastic band attachment arrangement 89, and the rear head part 5 comprises a second elastic band attachment arrangement 91. An elastic band (not shown) can be attached to the respective first and second elastic band attachment arrangements 89, 91 in a tensioned state. This ensures that the user, while training resuscitation, will have to push the head backwards to obtain a correct position of the head (to ensure air communication through the lung channel 17).

Fig. 12 depicts a plurality of main bodies 3, along with attached rear head parts 5, in a stacked state. The flexible torso sheet 21, chest plate 11 and compression plate 9 are also assembled. As shown with Fig. 12, the main bodies 3 and the rear head parts 5 can be stacked in a relatively compact manner. Before using a manikin 1, the front head part 15 and the face part 19 must also be assembled.

The rear head part 5 comprises a rear recess 93, which is indicated in Fig. 6. The rear recess 93 is arranged at the rear side of the rear head part 5, and is configured to receive the hinge connection 85 and the first joint part 71 when in the stacked state, as shown in Fig. 12.

## Claims

1. A manikin (1) for practicing resuscitation, comprising
- a main body (3) comprising a chest aperture (7);
- a compression plate (9) that extends across the chest aperture (7);
- a hinged support (23) that supports the compression plate (9) at one side of the chest aperture (7) and a sliding support (25) that supports the compression plate (9) at an opposite side of the chest aperture;
- a chest plate (11) above and attached to the compression plate (9), wherein the chest plate (11) comprises a curved lower plate face (29) that faces the compression plate (9).

2. A manikin (1) according to claim 1, **characterized in that** the main body (3) comprises
- a lower rim (4) defining a lower aperture (6);
- an upper main body surface (10);
- side walls (8) extending upwards from the lower rim towards the upper main body surface (10) of the main body (3);
wherein the upper main body surface (10) comprises the chest aperture (7).

3. A manikin (1) according to claim 1 or claim 2, **characterized in that** the chest plate comprises an upper plate (33) that has a convex, upward curvature, and a chest plate chamber (37) comprising electric circuitry (39).

4. A manikin (1) according to any one of the preceding claims, **characterized in that** the compression plate (9) is attached to an end body (41) at the hinged support (23), wherein the end body (41) comprises a curved support face (49), and wherein the hinged support (23) comprises a sensor (53) for measuring the angle of the compression plate (9) at the position of the hinged support (23).

5. A manikin (1) according to claim 4, **characterized in that** the sensor (53) is an inductive sensor and that the hinged support (23) further comprises a metal element (51).

6. A manikin (1) according to one of the preceding claims, **characterized in that** the chest plate (11) has a width that is larger than the width of the compression plate (9) and that fits within the chest aperture (7).

7. A manikin (1) according to one of the preceding claims, **characterized in that** the main body (3) comprises a neck portion (83) and that a flexible air transmission joint (70) is attached to the neck portion (83), wherein the flexible air transmission joint (70) comprises
- a first joint part (71) with an inner flow channel (73) and an outer sliding surface (75);
- a second joint part (77) with a joint aperture (81) and an inner sliding surface (79);
wherein the outer sliding surface (75) and the inner sliding surface (79) have coaxial or concentric curved shape, enabling mutual pivoting movement about a pivot axis (87).

8. A manikin (1) according to claim 2, or according to claim 2 and any other preceding claims, **characterized in that** it comprises a rear head part (5) and a detachable front head part (15), and when the front head part (15) is in a detached state,
- the lower aperture (6) is configured to receive the upper main body surface (10) and a part of the side walls (8) of another main body (3); and
- the rear head part (5) is configured to be received partially inside a rear head part (5) attached to said other main body (3).

9. A manikin (1) according to claim 8, **characterized in that**
- the main body (3) further comprises a neck portion (83);
- the manikin (1) further comprises a hinge connection (85) connecting the neck portion (83) and the rear head part (5) in a pivoting manner about a pivot axis (87); and
- the rear head part (5) comprises a rear recess (93) configured to receive a hinge connection (85) of another neck portion (83) and rear head part (5).

10. A manikin (1) according to one of the preceding claims, **characterized in that** the main body (3) comprises a receiving recess (26) at the location of the sliding support (25), wherein one end of the compression plate (9) is received in the receiving recess (26).

11. A stack of manikins (1) for practicing resuscitation, each manikin comprising a main body (3), a compression plate (9) extending across a chest aperture (7) of the main body (3), and a rear head part (5) attached to the main body with a hinge connection (85),
wherein an upper main body surface (10) and side walls (8) of the main body of lower manikins are received through lower apertures (6) defined by a lower rim (4) of the main body of upper manikins (1), and
wherein the rear head part (5) of upper manikins are received in the rear head part (5) of lower manikins.

## Patentansprüche

1. Modellpuppe (1) zum Üben der Wiederbelebung, umfassend:
- einen Hauptkörper (3), umfassend eine Brustöffnung (7);
- eine Kompressionsplatte (9), die sich über die Brustöffnung (7) hinweg erstreckt;
- eine Gelenkhalterung (23), die die Kompressionsplatte (9) an einer Seite der Brustöffnung (7) hält, und eine Gleithalterung (25), die die Kompressionsplatte (9) an einer gegenüberliegenden Seite der Brustöffnung hält;
- eine Brustplatte (11) oberhalb der Kompressionsplatte (9) und daran befestigt, wobei die Brustplatte (11) eine gekrümmte untere Plattenfläche (29) umfasst, die der Kompressionsplatte (9) zugewandt ist.

2. Modellpuppe (1) nach Anspruch 1, **dadurch gekennzeichnet, dass** der Hauptkörper (3) umfasst:
- einen unteren Rand (4), der eine untere Öffnung (6) definiert;
- eine obere Hauptkörperoberfläche (10);
- Seitenwände (8), die sich von dem unteren Rand nach oben zu der oberen Hauptkörperoberfläche (10) des Hauptkörpers (3) erstrecken;
wobei die obere Hauptkörperoberfläche (10) die Brustöffnung (7) umfasst.

3. Modellpuppe (1) nach Anspruch 1 oder Anspruch 2,
**dadurch gekennzeichnet, dass** die Brustplatte eine obere Platte (33), die eine konvexe, nach oben gerichtete Krümmung aufweist, und eine Brustplattenkammer (37) umfasst, die eine elektrische Schaltlogik (39) umfasst.

4. Modellpuppe (1) nach einem der vorstehenden Ansprüche,
**dadurch gekennzeichnet, dass** die Kompressionsplatte (9) an einem Endkörper (41) an der Gelenkhalterung (23) befestigt ist, wobei der Endkörper (41) eine gekrümmte Haltefläche (49) umfasst, und wobei die Gelenkhalterung (23) einen Sensor (53) zum Messen des Winkels der Kompressionsplatte (9) an der Position der Gelenkhalterung (23) umfasst.

5. Modellpuppe (1) nach Anspruch 4, **dadurch gekennzeichnet, dass** der Sensor (53) ein induktiver Sensor ist und dass die Gelenkhalterung (23) ferner ein Metallelement (51) umfasst.

6. Modellpuppe (1) nach einem der vorstehenden Ansprüche,
**dadurch gekennzeichnet, dass** die Brustplatte (11) eine Breite aufweist, die größer ist als die Breite der Kompressionsplatte (9) und die in die Brustöffnung (7) passt.

7. Modellpuppe (1) nach einem der vorstehenden Ansprüche,
**dadurch gekennzeichnet, dass** der Hauptkörper (3) einen Halsabschnitt (83) umfasst und dass ein flexibles Luftübertragungsgelenk (70) an dem Halsabschnitt (83) befestigt ist, wobei das flexible Luftübertragungsgelenk (70) umfasst:
- einen ersten Gelenkteil (71) mit einem inneren Strömungskanal (73) und einer äußeren Gleitoberfläche (75);
- einen zweiten Gelenkteil (77) mit einer Gelenköffnung (81) und einer inneren Gleitoberfläche (79);
wobei die äußere Gleitoberfläche (75) und die innere Gleitoberfläche (79) eine koaxiale oder konzentrische gekrümmte Form aufweisen, die eine gegenseitige Schwenkbewegung um eine Schwenkachse (87) ermöglicht.

8. Modellpuppe (1) nach Anspruch 2 oder nach Anspruch 2 und beliebigen anderen der vorstehenden Ansprüche, **dadurch gekennzeichnet, dass** sie einen hinteren Kopfteil (5) und einen abnehmbaren vorderen Kopfteil (15) umfasst, und wenn sich der vordere Kopfteil (15) in einem abgenommenen Zustand befindet,
- die untere Öffnung (6) konfiguriert ist, um die obere Hauptkörperoberfläche (10) und einen Teil der Seitenwände (8) eines anderen Hauptkörpers (3) aufzunehmen; und
- der hintere Kopfteil (5) konfiguriert ist, um teilweise innerhalb eines hinteren Kopfteils (5) aufgenommen zu werden, der an dem anderen Hauptkörper (3) befestigt ist.

9. Modellpuppe (1) nach Anspruch 8, **dadurch gekennzeichnet, dass**
- der Hauptkörper (3) ferner einen Halsabschnitt (83) umfasst;
- die Modellpuppe (1) ferner eine Gelenkverbindung (85) umfasst, die den Halsabschnitt (83) und den hinteren Kopfteil (5) in schwenkbarer Weise um eine Schwenkachse (87) verbindet; und
- der hintere Kopfteil (5) eine hintere Aussparung (93) umfasst, die konfiguriert ist, um eine Gelenkverbindung (85) eines anderen Halsabschnitts (83) und hinteren Kopfteils (5) aufzunehmen.

10. Modellpuppe (1) nach einem der vorstehenden Ansprüche,
**dadurch gekennzeichnet, dass** der Hauptkörper (3) eine
Aufnahmeaussparung (26) an der Stelle der Gleithalterung (25) umfasst, wobei ein Ende der Kompressionsplatte (9) in der Aufnahmeaussparung (26) aufgenommen wird.

11. Stapel von Modellpuppen (1) zum Üben der Wiederbelebung, wobei jede Modellpuppe einen Hauptkörper (3), eine Kompressionsplatte (9), die sich über eine Brustöffnung (7) des Hauptkörpers (3) hinweg erstreckt, und einen hinteren Kopfteil (5) umfasst, der mit einer Gelenkverbindung (85) an dem Hauptkörper befestigt ist,
wobei eine obere Hauptkörperoberfläche (10) und Seitenwände (8) des Hauptkörpers von unteren Modellpuppen durch untere Öffnungen (6) aufgenommen werden, die durch einen unteren Rand (4) des Hauptkörpers von oberen Modellpuppen (1) definiert sind, und
wobei der hintere Kopfteil (5) der oberen Modellpuppen in dem hinteren Kopfteil (5) der unteren Modellpuppen aufgenommen wird.

## Revendications

1. Mannequin (1) permettant de pratiquer la réanimation, comprenant
- un corps principal (3) comprenant une ouverture de poitrine (7) ;
- une plaque de compression (9) qui s'étend à travers l'ouverture de poitrine (7) ;
- un support articulé (23) qui supporte la plaque de compression (9) au niveau d'un côté de l'ouverture de poitrine (7) et un support coulissant (25) qui supporte la plaque de compression (9) au niveau d'un côté opposé de l'ouverture de poitrine ;
- une plaque de poitrine (11) au-dessus de la plaque de compression (9) et fixée à celle-ci, dans lequel la plaque de poitrine (11) comprend une face de plaque inférieure incurvée (29) qui fait face à la plaque de compression (9).

2. Mannequin (1) selon la revendication 1, **caractérisé en ce que** le corps principal (3) comprend
- une jante inférieure (4) définissant une ouverture inférieure (6) ;
- une surface de corps principale supérieure (10) ;
- des parois latérales (8) s'étendant vers le haut à partir du bord inférieur vers la surface de corps principale supérieure (10) du corps principal (3) ;
dans lequel la surface de corps principale supérieure (10) comprend l'ouverture de poitrine (7).

3. Mannequin (1) selon la revendication 1 ou la revendication 2,
**caractérisé en ce que** la plaque de poitrine comprend une plaque supérieure (33) qui présente une courbure convexe vers le haut, et une chambre de plaque de poitrine (37) comprenant une circuiterie électrique (39).

4. Mannequin (1) selon l'une quelconque des revendications précédentes,
**caractérisé en ce que** la plaque de compression (9) est fixée à un corps d'extrémité (41) au niveau du support articulé (23), dans lequel le corps d'extrémité (41) comprend une face de support incurvée (49), et dans lequel le support articulé (23) comprend un capteur (53) permettant de mesurer l'angle de la plaque de compression (9) au niveau de la position du support articulé (23).

5. Mannequin (1) selon la revendication 4, **caractérisé en ce que** le capteur (53) est un capteur inductif et **en ce que** le support articulé (23) comprend en outre un élément métallique (51).

6. Mannequin (1) selon l'une des revendications précédentes,
**caractérisé en ce que** la plaque de poitrine (11) présente une largeur qui est supérieure à la largeur de la plaque de compression (9) et qui s'adapte au sein de l'ouverture de poitrine (7).

7. Mannequin (1) selon l'une des revendications précédentes,
**caractérisé en ce que** le corps principal (3) comprend une partie de col (83) et qu'un joint de transmission d'air flexible (70) est fixé à la partie de col (83), dans lequel le joint de transmission d'air flexible (70) comprend
- une première partie de joint (71) avec un canal d'écoulement interne (73) et une surface de glissement externe (75) ;
- une seconde partie de joint (77) avec une ouverture de joint (81) et une surface de glissement interne (79) ;
dans lequel la surface de glissement externe (75) et la surface de glissement interne (79) présentent une forme coaxiale ou incurvée concentrique, permettant un mouvement de pivotement mutuel autour d'un axe de pivotement (87).

8. Mannequin (1) selon la revendication 2, ou selon la revendication 2 et l'une quelconque autre revendication précédente, **caractérisé en ce qu'il** comprend une partie de tête arrière (5) et une partie de tête avant amovible (15), et lorsque la partie de tête avant (15) est dans un état détaché,
- l'ouverture inférieure (6) est conçue pour recevoir la surface de corps supérieure du corps principal (10) et une partie des parois latérales (8) d'un autre corps principal (3) ; et
- la partie de tête arrière (5) est conçue pour être reçue partiellement à l'intérieur d'une partie de tête arrière (5) fixée audit autre corps principal (3).

9. Mannequin (1) selon la revendication 8, **caractérisé en ce que**
- le corps principal (3) comprend en outre une partie de col (83) ;
- le mannequin (1) comprend en outre une liaison à charnière (85) reliant la partie de col (83) et la partie arrière de tête (5) de manière pivotante autour d'un axe de pivotement (87) ; et
- la partie arrière de tête (5) comprend un renfoncement arrière (93) conçu pour recevoir une liaison à charnière (85) d'une autre partie de col (83) et d'une partie arrière de tête (5).

10. Mannequin (1) selon l'une des revendications précédentes,
**caractérisé en ce que** le corps principal (3) comprend un évidement de réception (26) au niveau de l'emplacement du support coulissant (25), dans lequel une extrémité de la plaque de compression (9) est reçue dans l'évidement de réception (26).

11. Pile de mannequins (1) permettant de pratiquer la réanimation, chaque mannequin comprenant un corps principal (3), une plaque de compression (9) s'étendant à travers une ouverture thoracique (7) du corps principal (3), et une partie arrière de tête (5) fixée au corps principal à l'aide d'une liaison à charnière (85),
dans lequel une surface corporelle principale supérieure (10) et des parois latérales (8) du corps principal de mannequins inférieurs sont reçues à travers des ouvertures inférieures (6) définies par un rebord inférieur (4) du corps principal de mannequins supérieurs (1), et
dans lequel la partie de tête arrière (5) des mannequins supérieurs est reçue dans la partie de tête arrière (5) des mannequins inférieurs.
